# EUROPÄISCHE PATENTSCHRIFT

(11) **EP 4 089 856 B1**
(45) Veröffentlichungstag und Bekanntmachung des Hinweises auf die Patenterteilung: **14.02.2024**
(21) Anmeldenummer: 22172434.7
(22) Anmeldetag: 10.05.2022
(51) Int. Cl.: H01R 25/16, H01R 4/50, H02G 5/00

(54) **KONTAKTSYSTEM ZUM ELEKTRISCHEN KONTAKTIEREN EINER DOPPELSTROMSCHIENE**
CONTACT SYSTEM FOR ELECTRICALLY CONTACTING A DUAL BUSBAR
SYSTÈME DE CONTACT PERMETTANT DE METTRE EN CONTACT ÉLECTRIQUE UN RAIL CONDUCTEUR DOUBLE

(30) Priorität: 11.05.2021 DE 102021112306
(43) Veröffentlichungstag der Anmeldung: 16.11.2022
(73) Patentinhaber: Lisa Dräxlmaier GmbH, 84137 Vilsbiburg (DE)
(72) Erfinder: Himmel, Jörg, 84072 Au i. d. Hallertau (DE); Neumayer, Franziska, 84144 Geisenhausen (DE); Hammerl, Reinhold, 85748 Garching (DE)

(56) Entgegenhaltungen:
- DE-C- 903 103
- US-A- 4 620 758
- US-A1- 2021 091 484

## Beschreibung

### Technisches Gebiet

Die vorliegende Erfindung betrifft ein Kontaktsystem zum elektrischen Kontaktieren einer Doppelstromschiene.

### Stand der Technik

Die vorliegende Erfindung wird im Folgenden hauptsächlich in Verbindung mit Fahrzeugbordnetzen beschrieben. Die Erfindung kann aber in jeder Anwendung genutzt werden, in welcher elektrische Lasten, insbesondere große elektrische Lasten mit erheblichen Leistungen von beispielsweise mehr als 10kW bzw. mit erheblichen Spannungen von beispielsweise mehr als 100V, übertragen werden.

In einem Niedervolt-Bordnetz eines Fahrzeugs kann elektrisch leitendes Blech einer Karosserie als Masse verwendet werden, wodurch eine Leitungslänge von Rückleitungen verkürzt werden kann. So kann näherungsweise auf die Hälfte aller Kabel im Fahrzeug verzichtet werden.

Zum Übertragen großer elektrischer Lasten kann KFZ-Hochvoltspannung mit beispielsweise mehr als 300V oder sogar mehr als 700V verwendet werden. Für die KFZ-Hochvoltspannung können Stromschienen aus massivem Metallmaterial verwendet werden. Wenn Stromschienen verwendet werden, können separate Plus- und Minus-Schienen verwendet werden um die erforderliche Sicherheit (Berührschutz, Schutz gegen Lichtbogen beziehungsweise Spannungsdurchschlag etc.) zu gewährleisten. Die Plus- und Minus-Schienen können als Doppelschiene, d.h. flächig mit geringem Abstand (<5mm) aufeinanderliegend ausgebildet sein. US4620758 A offenbart ein Kontaktsystem des Standes der Technik zum elektrischen Kontaktieren von Doppelstromschienen.

### Beschreibung der Erfindung

Eine Aufgabe der Erfindung ist es daher, unter Einsatz konstruktiv möglichst einfacher Mittel ein verbessertes Kontaktsystem zum elektrischen Kontaktieren einer Doppelstromschiene bereitzustellen.

Die Aufgabe wird durch die Gegenstände des unabhängigen Anspruchs gelöst. Vorteilhafte Weiterbildungen der Erfindung sind in den abhängigen Ansprüchen, der Beschreibung und den begleitenden Figuren angegeben.

In einem elektrisch angetriebenen Fahrzeug sind auch bei KFZ-Hochvoltspannung von bis zu 1000 Volt Gleichspannung große elektrische Stromflüsse erforderlich, um eine Antriebsleistung beziehungsweise Brems- oder Rekuperationsleistung zu übertragen. Rund um stromdurchflossene Leiter des Fahrzeugs werden durch diese Stromflüsse elektromagnetische Felder erzeugt. Um eine Abstrahlung der Felder zu verringern oder auch zu verhindern, können die Leiter geschirmt werden. Alternativ oder ergänzend können die Leiter für Plus und Minus möglichst parallel und nah zusammen angeordnet werden, da sich die durch die entgegengesetzten Stromflüsse verursachten elektromagnetischen Felder gegenseitig auslöschen.

Auch bei Stromschienen können die Stromschiene für den Pluspol beziehungsweise das Pluspotenzial und die Stromschiene für den Minuspol beziehungsweise das Minuspotenzial sehr nahe zusammen angeordnet werden, indem die beiden Stromschienen deckungsgleich aufeinandergestapelt werden. Die gestapelten Stromschienen sind dabei einzeln elektrisch isoliert. Diese Anordnung kann als Doppelstromschiene bezeichnet werden.

Um den Effekt der Auslöschung auch an Kontaktstellen aufrechtzuerhalten, wird bei dem hier vorgestellten Ansatz ein Zangenkontakt vorgeschlagen, der die enge Führung der Stromflüsse auch an der Kontaktstelle ermöglicht.

Es wird ein Kontaktsystem zum elektrischen Kontaktieren einer Doppelstromschiene vorgeschlagen, wobei die Doppelstromschiene zwei Stromschienen aus einem Aluminiummaterial aufweist, die durch eine Isolierung gegeneinander isoliert sind und zu einem Stapel übereinander gestapelt sind, wobei beide Stromschienen in einem Kontaktbereich je ein elektrisch leitend mit der Stromschiene verbundenes Kontaktelement aus einem Kupfermaterial aufweisen, wobei die Kontaktelemente gegenüberliegend an Außenflächen der Doppelstromschiene angeordnet sind, wobei die Kontaktelemente von zwei, durch eine Maulweite voneinander beabstandeten Kontakten einer Kontakteinrichtung elektrisch kontaktiert sind.

Unter einer Stromschiene kann ein massiver Streifen Aluminiumblech verstanden werden. Aluminium beziehungsweise Aluminiumlegierungen weisen eine gute elektrische Leitfähigkeit bei geringem Gewicht und geringen Materialkosten auf. Die Stromschiene kann einen rechteckigen Leitungsquerschnitt aufweisen. Dabei kann die Stromschiene länglich sein und eine Länge von beispielsweise mehr als 0,5 m, vorzugsweise mehr als 1 m, und eine Breite von beispielsweise zwischen 0,5 cm und 10 cm, vorzugsweise zwischen 1 cm und 5 cm, aufweisen. Die Stromschiene kann ferner eine Dicke von beispielsweise zwischen 1 mm und 10 mm aufweisen. Die Stromschiene kann auf allen Seiten eine Isolierung aufweisen, d.h. von einer Isolierung umhüllt sein. Die Isolierung kann beispielsweise aus einem Kunststoffmaterial sein. Das Kunststoffmaterial kann ein Thermoplast sein. Die Stromschiene kann mit dem Thermoplast umspritzt sein. Die Isolierung kann Eigenschaften aufweisen, die für KFZ-Hochvoltspannung von bis zu 1000 Volt Gleichstrom ausgelegt sind. Insbesondere kann eine Materialstärke der Isolierung eine Durchschlagfestigkeit gegen die KFZ-Hochvoltspannung sicherstellen.

Eine Doppelstromschiene kann aus zwei Stromschienen mit gleichen Abmessungen bestehen. Die beiden Stromschienen können an Flachseiten aufeinandergestapelt sein. Die Stromschienen können deckungsgleich angeordnet sein. Die Doppelstromschiene kann mit einem Kunststoffmaterial ummantelt sein. Alternativ oder ergänzend kann die Doppelstromschiene mit einem Gewebematerial ummantelt sein. Das Gewebematerial kann beispielsweise als Gewebeband um die Stromschiene gewickelt sein. In einem Kontaktbereich kann die Stromschiene freiliegen, d.h. können z.B. die Isolierung und Ummantelung zumindest bereichsweise entfernt worden sein. Die Doppelstromschiene kann auch zusätzlich durch einen elektrisch leitenden Mantel gegen die Abstrahlung von elektromagnetischen Feldern geschirmt sein.

Ein Kontaktelement kann ein Einsatz oder Aufsatz der jeweiligen Stromschiene sein. Das Kontaktelement kann beispielsweise mit der Stromschiene verschweißt sein. Eine freiliegende Oberfläche des Kontaktelements kann eine Grenzfläche bilden, mit der das Kontaktelement mit einem der Kontakte der Kontakteinrichtung in mechanischen und elektrischen Kontakt kommen kann. Das Kontaktelement besteht zumindest im Bereich dieser freiliegenden Grenzfläche aus einem Kupfermaterial, d.h. reinem Kupfer, einer Kupfer-haltigen Legierung oder einer kupfer-haltigen Mischung. Das Aluminiummaterial der Stromschienen kann an seiner Oberfläche oxidieren und kann dadurch eine Oxidschicht mit geringer elektrischer Leitfähigkeit aufweisen. Das Kupfermaterial der Kontaktelemente oxidiert nicht oder nur geringfügig und weist im Allgemeinen eine wenigstens ebenso hohe elektrische Leitfähigkeit auf wie das Aluminiummaterial der Stromschiene. Die Oberfläche der Kontaktelemente bleibt so elektrisch leitend. Die Kontaktelemente können zumindest so dick, vorzugsweise dicker, sein wie die Isolierung. Die Kontaktelemente können über die Oberfläche der Stromschienen überstehen. Die Kontaktelemente können so eine Dicke der Isolierung rund um die Kontaktelemente überbrücken. Die Kontaktelemente können über die Isolierung überstehen. Die Kontaktelemente können in Aussparungen der Isolierung angeordnet sein. Die Aussparungen können die Form der Kontaktelemente aufweisen.

Ein Kontakt kann ein Abschnitt einer weiteren Stromschiene, welche eine der zuvor genannten Stromschienen kontaktieren soll, sein. Der Kontakt kann zumindest einen der weiteren Stromschiene entsprechenden Leitungsquerschnitt aufweisen. Der Kontakt kann aus einem Kupfermaterial oder einem Aluminiummaterial sein. Wenn der Kontakt aus einem Aluminiummaterial ist, kann der Kontakt ebenso ein Kontaktelement aus einem Kupfermaterial aufweisen. Dann kann die elektrische Verbindung zwischen der zuvor genannten Stromschiene und dem Kontakt über zwei berührende Kontaktelemente hergestellt werden.

Das Kontaktelement und der Kontakt können eine aufeinander abgestimmte Kontur aufweisen. Beispielsweise können das Kontaktelement und der Kontakt zumindest in Teilbereichen verrundet, d.h beispielsweise sphärisch geformt sein. Dadurch kann ein geringer Winkelversatz zwischen dem Kontaktelement und dem Kontakt toleriert werden.

Eine Maulweite kann ein Abstand zwischen zwei gegenüberliegenden Kontaktflächen sein. Die Kontaktflächen können bei Kontakten aus dem Kupfermaterial auf einer Oberfläche des Kontakts liegen. Bei Kontakten mit Kontaktelementen liegen die Kontaktflächen auf den Kontaktelementen.

Die Kontakte der Kontakteinrichtung können je eine Einführschräge zum Aufschieben auf die Kontaktelemente aufweisen. Eine Einführschräge kann eine Fase oder Rundung sein. Die Einführschräge kann auch durch einen aufgebogenen Rand des jeweiligen Kontakts erzeugt werden. Durch die Einführschrägen kann die Doppelstromschiene zwischen den Kontakten zentriert werden. Die Einführschrägen können ein Kontaktieren der Kontaktelemente erleichtern.

Die Kontakte können durch eine Anpresskraft zusammengepresst werden und gegen die Kontaktelemente gepresst werden. Die Anpresskraft kann senkrecht zu Kontaktflächen der Kontakte wirken. Die Anpresskraft kann als Normalkraft bezeichnet werden.

Die Maulweite der Kontakteinrichtung kann in einem mechanisch entspannten Zustand der Kontakte kleiner als eine Dicke des Kontaktbereichs sein. Die Kontakte können beim Aufschieben auf die Kontaktelemente elastisch verformt und auseinandergedrückt werden. Die Anpresskraft kann zumindest anteilig durch eine Rückstellkraft der Kontakte aufgrund einer elastischen Verformung der Kontakte beim Aufschieben der Kontakteinrichtung auf die Doppelstromschiene bereitgestellt werden. Die Kontakte können eine mechanische Vorspannung aufweisen, um die Anpresskraft gegen die Kontaktelemente zu erzeugen.

Die Kontakteinrichtung kann eine Anpresseinrichtung zum Zusammenpressen der Kontakte aufweisen. Die Kontakteinrichtung kann beispielsweise ein Gehäuse aufweisen. Die Anpresseinrichtung kann Teil des Gehäuses sein. Das Gehäuse kann eine Außenseite der Kontakte umschließen. Das Gehäuse kann eine elektrische Isolierung der Kontakteinrichtung bereitstellen.

Zwischen zumindest einem der Kontakte und der Anpresseinrichtung kann ein Federelement angeordnet sein. Ein Federelement kann elastisch verformt werden und der Verformung die Anpresskraft entgegensetzen. Das Federelement beispielsweise eine Federscheibe oder eine Spiralfeder sein. Die Anpresseinrichtung kann als Widerlager für das Federelement dienen. Das Federelement kann beim Einschieben des Kontaktbereichs zwischen die Kontakte elastisch verformt werden, um die Anpresskraft bereitzustellen.

Die Anpresseinrichtung kann als ein den Kontaktbereich umschließender Käfig mit einem zumindest auf einen der Kontakte wirkenden Druckelement ausgebildet sein. Die Anpresseinrichtung kann zumindest ein Band aufweisen, das um den Kontaktbereich herum verläuft. Das Band kann eine Zugkraft als Gegenkraft zu einer Druckkraft des Druckelements aufnehmen und auf eine dem Druckelement gegenüberliegende Seite des Kontaktbereichs übertragen.

Das Druckelement kann eine an dem Käfig abgestützte Druckfeder sein. Die Druckfeder kann zwischen einer Rückseite eines Kontakts und dem Käfig angeordnet sein. Die Druckfeder kann bei einem Zusammenbau des Kontaktsystems zusammengedrückt und so gespannt werden.

Das Druckelement kann eine an dem Käfig abgestützte Druckschraube sein. Der Käfig kann ein Gewinde für die Druckschraube aufweisen. Die Druckschraube kann eine Druckplatte aufweisen, die an der Rückseite des Kontakts anliegt. Die Druckschraube kann nach dem Zusammenbau des Kontaktsystems angezogen werden.

Die Anpresseinrichtung kann einen Zuganker aufweisen. Der Zuganker kann in einem Durchbruch durch die Kontakte, die Stromschienen und die Kontaktelemente angeordnet sein. Ein Zuganker kann beispielsweise eine Schraube mit einer aufgesetzten Mutter sein. Der Zuganker kann über Druckflächen an seinen entgegengesetzten Enden die Anpresskraft auf die Rückseiten der Kontakte übertragen. Der Durchbruch kann einen größeren Durchmesser als der Zuganker aufweisen. Der Zuganker kann durch einen umhüllenden Isolator von den Kontakte, den Stromschienen und den Kontaktelemente elektrisch isoliert sein. Zwischen einer Druckfläche und dem Kontakt kann das Federelement angeordnet sein. Das Federelement kann durch den Zuganker vorgespannt sein. Das Federelement kann thermische Ausdehnungen und eine Relaxation des Materials kompensieren.

Die Durchbrüche durch die Kontakte können als einseitig offene Nuten ausgeführt sein. Die Kontakte können geschlitzt ausgeführt sein. Durch die Nuten kann das Kontaktsystem getrennt und wieder zusammengefügt werden, ohne den Zuganker auszubauen. Zum Trennen kann der Zuganker lediglich gelockert werden.

Der Zuganker kann einen Exzenterschnellspanner aufweisen. Der Exzenterschnellspanner kann auf den Zuganker aufgesteckt oder aufgeschraubt sein. Durch den

Exzenterschnellspanner kann der Zuganker ohne Werkzeug gespannt und gelöst werden. Dadurch kann das Kontaktsystem einfach getrennt und zusammengesetzt werden.

### Kurze Figurenbeschreibung

Nachfolgend wird ein vorteilhaftes Ausführungsbeispiel der Erfindung unter Bezugnahme auf die begleitenden Figuren erläutert. Es zeigen:

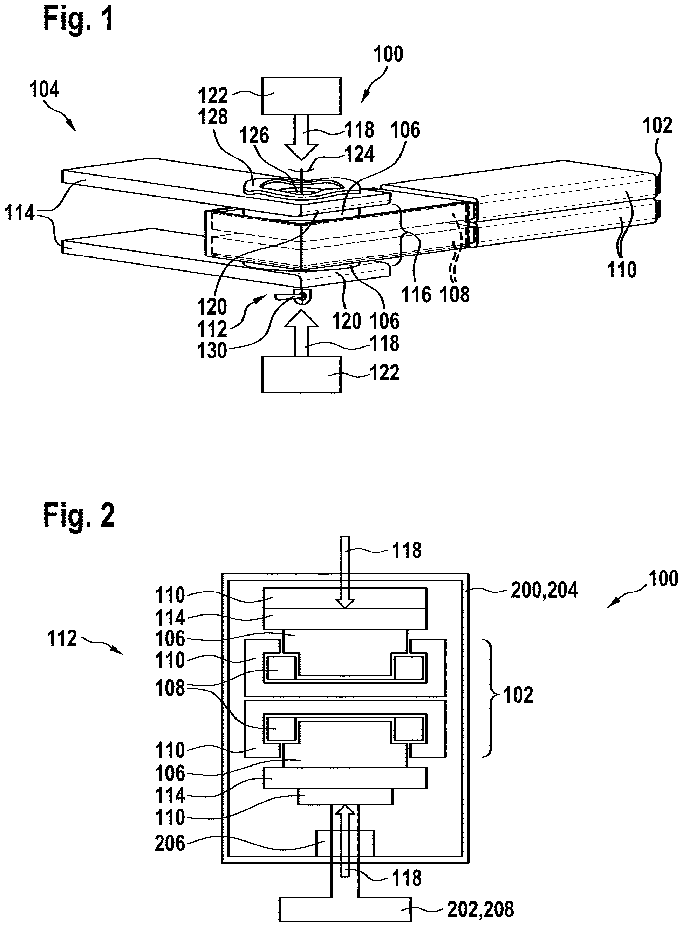

Fign. 1 und 2 Darstellungen eines Kontaktsystems gemäß Ausführungsbeispielen.

Die Figur ist lediglich eine schematische Darstellung und dient nur der Erläuterung der Erfindung. Gleiche oder gleichwirkende Elemente sind durchgängig mit den gleichen Bezugszeichen versehen.

### Detaillierte Beschreibung

Fig. 1 zeigt eine Darstellung eines Kontaktsystems 100 zum elektrischen Kontaktieren einer Doppelstromscheine 102. Das Kontaktsystem 100 besteht aus einer Kontakteinrichtung 104 und Kontaktelementen 106 an der Doppelstromschiene 102. Die Doppelstromschiene 102 besteht aus zwei gestapelten einzeln isolierten Stromschienen 108. Die Stromschienen 108 sind aus einem Aluminiummaterial. Die Stromschienen 108 sind zumindest durch eine Isolierung 110 aus einem Kunststoffmaterial isoliert, können aber auch einzeln und/oder zusammen durch weitere, hier nicht dargestellte Schichten isoliert und/oder geschirmt sein.

Jede Stromschiene 108 weist in einem Kontaktbereich 112 des Kontaktsystems 100 ein Kontaktelement 106 auf. Die Kontaktelemente 106 sind auf entgegengesetzten Flachseiten der Doppelstromschiene 102 angeordnet. Die Kontaktelemente 106 sind aus einem Kupfermaterial. Die Kontaktelemente 106 sind beispielsweise durch einen Reibschweißprozess stoffschlüssig mit dem Aluminiummaterial der jeweiligen Stromschiene 108 verbunden. Die Isolierung 110 weist im Kontaktbereich 112 Aussparungen für die Kontaktelemente 106 auf. Die Kontaktelemente 106 sind zumindest bündig zu einer Oberfläche der Isolierung 110, können aber auch überstehen.

Die Kontakteinrichtung 104 weist zwei Kontakte 114 auf, die die Kontaktelemente 106 elektrisch kontaktieren. Die Kontakte 114 sind im Kontaktbereich 112 im Wesentlichen parallel zueinander ausgerichtet. Die Doppelstromscheine 102 ist zwischen den Kontakten 114 angeordnet. Die Kontakte 114 sind durch eine Maulweite 116 voneinander beabstandet. Die Maulweite 116 entspricht im Wesentlichen einer Dicke der Doppelstromschiene 102 einschließlich der Kontaktelemente 106. Die Kontakte 114 weisen einen ähnlichen Leitungsquerschnitt auf wie die Stromschienen 108. Die Kontakte 114 sind hier aus einem Kupfermaterial. Die Kontakte 114 können auch aus einem Aluminiummaterial sein, weisen dann jedoch ebenfalls Kontaktelemente aus einem Kupfermaterial auf. Dann können die Kontakte 114 auch als weitere Stromschienen bezeichnet werden.

Die Kontakte 114 werden durch eine Anpresskraft 118 gegen die Kontaktelemente 106 gepresst, um einen geringen Übergangswiderstand zu erreichen. Die Anpresskraft 118 wirkt normal zu den Kontakten 114.

In einem Ausführungsbeispiel wird die Anpresskraft 116 durch eine Vorspannung der Kontakte 114 erzeugt. Dabei ist die Maulweite 116 kleiner als die Dicke der Doppelstromschiene 102 mit den Kontaktelementen 106. Die Kontakte 114 werden also auseinandergedrückt, wenn die Doppelstromschiene 102 zwischen die Kontakte 114 eingeschoben wird. Um das Einschieben zu erleichtern, weisen die Kontakte 114 an einem vorderen Ende je eine Einführschräge 120 auf. Die Einführschrägen 120 gleiten an der Doppelstromschiene 102 ab, während sie zwischen den Kontakten 114 angeordnet wird.

In einem Ausführungsbeispiel wird die Anpresskraft durch eine Anpresseinrichtung 122 der Kontakteinrichtung 104 bereitgestellt. Hier weist die Anpresseinrichtung 122 einen Zuganker 124 auf, der elektrisch isoliert in einem Durchbruch 126 durch die Kontakte 114, die Kontaktelemente 106 und die Doppelstromschiene 102 angeordnet ist. Der Zuganker 124 übt zum Erzeugen der Anpresskraft 118 eine Zugkraft auf Rückseiten der Kontakte 114 aus.

In einem Ausführungsbeispiel sind die Kontakte 114 geschlitzt ausgeführt, um den bereits im Durchbruch 126 der Doppelstromschiene 102 angeordneten Zuganker 124 beim Einführen des Kontaktbereichs 112 in die Kontrakteinrichtung 104 aufzunehmen. Der während des Einsetzens gelöste Zuganker 124 wird nach dem Einsetzen gespannt, um die Anpresskraft 118 zu erzeugen.

In einem Ausführungsbeispiel ist zumindest zwischen einem der Kontakte 114 und dem Zuganker 124 ein Federelement 128 angeordnet. Das Federelement kann durch elastische Verformung thermische Dehnungen und/oder Setzungen des Kontaktbereichs 112 kompensieren und so die elektrisch leitende Verbindung sicherstellen.

In einem alternativen Ausführungsbeispiel ist das Federelement 128 zwischen einem hier nicht dargestellten Gehäuse der Kontakteinrichtung 104 und zumindest einem der Kontakte 114 angeordnet. Dabei ist der Durchbruch unnötig, da das Gehäuse den Kontaktbereich 112 umschließt und die erforderlichen Zugkräfte zum Bereitstellen der Anpresskraft 118 aufnimmt.

In einem Ausführungsbeispiel ist der Zuganker 124 eine Schraube mit aufgeschraubter Mutter. Alternativ kann der Zuganker 124 einen Exzenterschnellspanner 130 aufweisen. Damit kann der Zuganker 124 werkzeuglos gespannt werden.

Die Zugkräfte können auch durch einen den Kontaktbereich 112 umschließenden Käfig aufgenommen werden. An dem Käfig kann sich das Federelement 128 abstützen. Alternativ oder ergänzend kann auch eine Druckschraube in ein Gewinde des Käfigs eingeschraubt sein und auf einen der Kontakte 114 drücken, um die Anpresskraft 18 zu erzeugen.

Fig. 2 zeigt eine Schnittdarstellung eines Kontaktsystems 100 gemäß einem Ausführungsbeispiel. Das Kontaktsystem 100 entspricht dabei im Wesentlichen dem Kontaktsystem in Fig. 1. Zusätzlich ist hier der den Kontaktbereich 112 umschließende Käfig 200 dargestellt. Die Doppelstromschiene 102 mit den Kontaktelementen 106 und die beiden Kontakte 114 sind innerhalb des Käfigs 200 angeordnet. Der Käfig 200 ist aus einem Metallmaterial. Der Käfig 200 ist von den Kontakten 114 und den Stromschienen 108 elektrisch isoliert. Ein Druckelement 202 stützt sich an dem Käfig 200 ab und drückt mit der Anpresskraft 118 gegen einen der Kontakte 114. Der Käfig 200 überträgt eine Gegenkraft zu der Anpresskraft 118 auf eine gegenüberliegende Seite des Kontaktbereichs 112, wo der Käfig 200 die Gegenkraft als Anpresskraft 118 auf den anderen Kontakt 114 überträgt. Der Käfig 200 und das Druckelement 202 wirken dabei wie eine Zwinge und pressen alle Elemente im Kontaktbereich 112 zusammen. Zwischen den Stromschienen 108 ist eine druckfeste Isolierung 110 angeordnet, um eine Annäherung der Stromschienen 108 aneinander zu verhindern und so einen Kurzschluss zwischen den unterschiedlichen elektrischen Potenzialen der beiden Stromschienen 108 zu verhindern.

Das Druckelement 202 ist in einem Ausführungsbeispiel ein zwischen dem Käfig 200 und dem Kontakt 114 angeordneter Keil. Der Keil kann einen geringen Keilwinkel aufweisen und so selbsthemmend gegen ein Wegrutschen gesichert sein.

Alternativ oder ergänzend kann sich das Druckelement 202 auch an einem Gehäuse 204 des Kontaktsystems 100 abstützen. Das Gehäuse 204 kann eine Funktion des Käfigs 200 übernehmen. Das Gehäuse 204 ist aus einem elektrisch isolierenden Kunststoffmaterial und umschließt ebenfalls den Kontaktbereich 112.

In einem Ausführungsbeispiel weist der Käfig 200 auf der Seite des einen Kontakts 114 ein Gewinde 206 auf. In das Gewinde ist als das Druckelement 202 eine Druckschraube 208 eingeschraubt. Die Druckschraube 208 weist eine isolierte Druckplatte auf. Die Druckplatte liegt an dem Kontakt 114 an und verteilt die Anpresskraft 118 der Druckschraube 208.

Mit anderen Worten wird ein Kontaktsystem eines Zangenklemmsteckers für ein Doppelschienen-Energieübertragungssystem vorgestellt.

Zur Übertragung elektrischer Energie können neben klassischen Rundleiter- und Einzelschienensystemen im Bereich der E-Mobilität auch Doppelschienensysteme eingesetzt werden, da sie durch Feldauslöschung Vorteile bezüglich geringerer elektromagnetischer Feldabstrahlung aufweisen. Die Feldauslöschung resultiert aus einer geometrischen Anordnung von deckungsgleich übereinanderliegenden Reckteckschienen in möglichst geringem Abstand zueinander. Für die Anbindung dieser Doppelschienensysteme an Komponenten wie Ladedosen, Schaltboxen oder Batterien sind Schnittstellen mit einem Kontaktierungssystem erforderlich.

Der vorliegende Ansatz stellt ein Kontaktierungssystem vor, das beide Potentiale gegenüberliegend mit Gegenkontakten verbindet und durch eine Einhausung so zusammenpresst, dass eine möglichst hohe Normalkraft auf die Kontakte wirkt.

Im Rahmen der steigenden elektrischen Leistungsanforderungen im Rahmen der E-Mobilität rückt der Aspekt des Insassenschutzes vor elektromagnetischen Belastungen (ICNIRP) immer stärker in den Fokus. Hochvolt (HV)-Doppelschienensysteme können hohe Energiemengen bei gleichzeitig geringer elektromagnetischer Feldabstrahlung transportieren. Das Schienensystem benötigt geeignete außenraumtaugliche Schnittstellen. Durch das vorgestellte Kontaktsystem ist die Doppelschiene im Bauraum als Schnittstelle zur Schaltbox oder Batterie einsetzbar.

Die zu kontaktierenden Enden des Stromschienenpaares sind übereinanderliegend zu einem Kontaktpaket zusammengefasst. Zusätzlich können Kontaktelemente auf die Schienen aufgebracht werden. Das Kontaktpaket wird zwischen den Gegenkontakten positioniert und in dieser Position mit einer Kraft senkrecht zur Schienenfläche beaufschlagt. Zur Vermeidung von Relaxationseffekten kann die Verbindung mit einem Federelement gesichert werden.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft

### BEZUGSZEICHENLISTE

- 100: Kontaktsystem
- 102: Doppelstromschiene
- 104: Kontakteinrichtung
- 106: Kontaktelement
- 108: Stromschiene
- 110: Isolierung
- 112: Kontaktbereich
- 114: Kontakt
- 116: Maulweite
- 118: Anpresskraft
- 120: Einführschräge
- 122: Anpresseinrichtung
- 124: Zuganker
- 126: Durchbruch
- 128: Federelement
- 130: Exzenterschnellspanner

- 200: Käfig
- 202: Druckelement
- 204: Gehäuse
- 206: Gewinde
- 208: Druckschraube

## Patentansprüche

1. Kontaktsystem (100) zum elektrischen Kontaktieren einer Doppelstromschiene (102), umfassend eine Doppelstromschiene (102) und eine Kontakteinrichtung (104), wobei die Doppelstromschiene (102) zwei Stromschienen (108) aus einem Aluminiummaterial aufweist, die jeweils durch eine Isolierung (110) gegeneinander isoliert sind und zu einem Stapel übereinander gestapelt sind, wobei beide Stromschienen (108) in einem Kontaktbereich (112) je ein elektrisch leitend mit der Stromschiene (108) verbundenes Kontaktelement (106) aus einem Kupfermaterial aufweisen, wobei die Kontaktelemente (106) gegenüberliegend an Außenflächen der Doppelstromschiene (102) angeordnet sind, wobei die Kontaktelemente (106) von zwei, durch eine Maulweite (116) voneinander beabstandeten Kontakten (114) der Kontakteinrichtung (104) elektrisch kontaktiert sind.

2. Kontaktsystem (100) gemäß Anspruch 1, bei der die Kontakte (114) der Kontakteinrichtung (104) je eine Einführschräge (120) zum Aufschieben auf die Kontaktelemente (106) aufweisen.

3. Kontaktsystem (100) gemäß einem der vorhergehenden Ansprüche, bei der die Maulweite (116) der Kontakteinrichtung (104) in einem entspannten Zustand der Kontakte (114) kleiner als eine Dicke des Kontaktbereichs (112) ist, wobei die Kontakte (114) beim Aufschieben auf die Kontaktelemente (106) elastisch verformt und auseinandergedrückt werden.

4. Kontaktsystem (100) gemäß einem der vorhergehenden Ansprüche, bei dem die Kontakteinrichtung (104) eine Anpresseinrichtung (122) zum Zusammenpressen der Kontakte (114) aufweist.

5. Kontaktsystem (100) gemäß Anspruch 4, bei dem zwischen zumindest einem der Kontakte (114) und der Anpresseinrichtung (122) ein Federelement (128) angeordnet ist.

6. Kontaktsystem (100) gemäß einem der Ansprüche 4 bis 5, bei dem die Anpresseinrichtung (122) als ein den Kontaktbereich (112) umschließender Käfig (200) mit einem zumindest auf einen der Kontakte (114) wirkenden Druckelement (202) ausgebildet ist.

7. Kontaktsystem (100) gemäß Anspruch 6, bei dem das Druckelement (202) eine an dem Käfig (200) abgestützte Druckschraube (208) ist.

8. Kontaktsystem (100) gemäß einem der Ansprüche 4 bis 7, bei dem die Anpresseinrichtung (122) einen Zuganker (124) aufweist, wobei der Zuganker (124) in einem Durchbruch (126) durch die Kontakte (114), die Stromschienen (108) und die Kontaktelemente (106) angeordnet ist.

9. Kontaktsystem (100) gemäß Anspruch 8, bei dem die Durchbrüche (126) durch die Kontakte (114) als einseitig offene Nuten ausgeführt sind.

10. Kontaktsystem (100) gemäß einem der Ansprüche 8 bis 9, bei dem der Zuganker (124) einen Exzenterschnellspanner (130) aufweist.

## Claims

1. Contact system (100) for electrically contacting a double busbar (102), comprising a double busbar (102) and a contact device (104),
wherein the double busbar (102) having two busbars (108) made of an aluminum material, which are each insulated from one another by insulation (110) and are stacked on top of one another to form a stack, wherein the two busbars (108) each having, in a contact region (112), a contact element (106) made of an electroconductive copper material connected to the busbar (108), wherein the contact elements (106) being arranged opposite one another on outer surfaces of the double busbar (102), wherein the contact elements (106) being electrically contacted by two contacts (114) of the contact device (104) which are spaced apart from one another by a rim width (116).

2. Contact system (100) according to claim 1, in which the contacts (114) of the contact device (104) each have a lead-in chamfer(120) for sliding onto the contact elements (106).

3. Contact system (100) according to one of the preceding claims, wherein the rim width (116) of the contact device (104) in a not-tensioned state of the contacts (114) is smaller than a thickness of the contact area (112), wherein the contacts (114) are elastically formed and pressed apart when slid onto the contact elements (106).

4. Contact system (100) according to one of the preceding claims, wherein the contact device (104) comprises a pressing device (122) for pressing the contacts (114) together.

5. Contact system (100) according to claim 4, wherein a spring element (128) is arranged between at least one of the contacts (114) and the pressing device (122).

6. Contact system (100) according to one of claims 4 to 5, wherein the pressing device (122) is designed as a cage (200) enclosing the contact area (112) with a pressure element (202) acting on at least one of the contacts (114).

7. Contact system (100) according to claim 6, wherein the pressure element (202) is a pressure screw (208) supported on the cage (200).

8. Contact system (100) according to any one of claims 4 to 7, wherein the pressing device (122) comprises a tie rod (124), wherein the tie rod (124) is arranged in an opening (126) through the contacts (114), the busbars (108) and the contact elements (106).

9. Contact system (100) according to claim 8, in which the openings (126) through the contacts (114) are designed as one-sided open grooves.

10. Contact system (100) according to any one of claims 8 to 9, wherein the tie rod (124) comprises an eccentric quick-release turnbuckle (130).

## Revendications

1. Système de contact (100) pour établir un contact électrique avec une barre du courant double (102), comprenant une barre du courant double (102) et un dispositif de contact (104),
la barre du courant double (102) présentant deux barres conductrices (108) en un matériau d'aluminium, qui sont respectivement isolées l'une de l'autre par une isolation (110) et sont empilées l'une sur l'autre pour former une pile, les deux barres conductrices (108) présentant chacune dans une zone de contact (112) un élément de contact (106) en un matériau de cuivre, relié de manière électriquement conductrice à la barre conductrice (108), les éléments de contact (106) étant disposés en vis-à-vis sur des surfaces extérieures de la barre du courant double (102), les éléments de contact (106) étant mis en contact électrique par deux contacts (114) du dispositif de contact (104), espacés l'un de l'autre par une largeur de mâchoire (116).

2. Système de contact (100) selon la revendication 1, dans lequel les contacts (114) du dispositif de contact (104) présentent chacun un biseau d'entrée (120) destiné à être enfilé sur les éléments de contact (106).

3. Système de contact (100) selon l'une quelconque des revendications précédentes, dans lequel la largeur de mâchoire (116) du dispositif de contact (104) est inférieure à une épaisseur de la zone de contact (112) dans un état détendu des contacts (114), les contacts (114) étant déformés élastiquement et écartés les uns des autres lorsqu'ils sont poussés sur les éléments de contact (106).

4. Système de contact (100) selon l'une quelconque des revendications précédentes, dans lequel le dispositif de contact (104) comprend un dispositif de pressage (122) pour presser les contacts (114) les uns contre les autres.

5. Système de contact (100) selon la revendication 4, dans lequel un élément de ressort (128) est disposé entre au moins l'un des contacts (114) et le dispositif de pressage (122).

6. Système de contact (100) selon l'une des revendications 4 à 5, dans lequel le dispositif de pressage (122) est réalisé sous la forme d'une cage (200) entourant la zone de contact (112) et comportant un élément de pression (202) agissant sur au moins l'un des contacts (114).

7. Système de contact (100) selon la revendication 6, dans lequel l'élément de pression (202) est une vis de pression (208) supportée par la cage (200).

8. Système de contact (100) selon l'une quelconque des revendications 4 à 7, dans lequel le dispositif de pressage (122) comprend un tirant (124), le tirant (124) étant disposé dans une ouverture (126) traversant les contacts (114), les barres conductrices (108) et les éléments de contact (106).

9. Système de contact (100) selon la revendication 8, dans lequel les passages (126) à travers les contacts (114) sont réalisés sous forme de rainures ouvertes d'un côté.

10. Système de contact (100) selon l'une quelconque des revendications 8 à 9, dans lequel le tirant (124) comprend un dispositif de serrage rapide excentré (130).
